# EUROPEAN PATENT SPECIFICATION

(11) **EP 3 753 721 B1**
(45) Date of publication and mention of the grant of the patent: **27.08.2025**
(21) Application number: 20180649.4
(22) Date of filing: 18.06.2020
(51) Int. Cl.: B29D 24/00, B29C 65/42, B29C 48/09, B29C 48/12, B29C 48/151, B29C 48/156, B29K 101/12, B29K 23/00, B29L 24/00

(54) **PLATE AND TANK**
PLATTE UND TANK
PLAQUE ET CUVE

(30) Priority: 19.06.2019 FI 20195540
(43) Date of publication of application: 23.12.2020
(73) Proprietor: Spectro Plast Oy, 33400 Tampere (FI)
(72) Inventor: Kirjonen, Janne, 33400 Tampere (FI)
(74) Representative: Kolster Oy Ab

(56) References cited:
- FI-B- 126 050
- NL-C- 91 905
- US-A1- 2014 248 470

## Description

### Background of the invention

The invention relates to a plate which may be used as an end plate of a tank, for example.

It is challenging to construct large plates in the order of several square metres, for example, for such uses as ends of tanks. The plate needs to be adequately rigid and straight, but at the same time reasonably lightweight and simple to handle. A plate of this kind is disclosed in the publication FI 126050. Document US 2014/248470 A1 discloses a method of producing a plate-like construction having a double-wall structure and its use. Document NL 91 905 C discloses a method for manufacturing a wall of thermoplastic plastic pipes.

### Brief description of the invention

It is an object of the invention to provide a new type of plate and tank. The solution according to the invention is characterized by what is disclosed in the independent claims. Preferred embodiments of the invention are disclosed in the dependent claims.

In the solution put forth, the plate is formed out of a plurality of adjacent profiles, which profiles are extruded hollow and comprise a plastic material in their walls. The profiles are substantially straight and rigid. The profiles are adapted adjacently and connected to each other. The profiles have such a cross section that when an adjacent profile is joined to both sides of the profile so that two flanks of the profile abut the adjacent profiles, more than 50 % of the outer surface area of the profile is against the adjacent profiles. Such a plate is relatively lightweight, dimensionally accurate, and exhibits a good bending strength.

The cross section of the profiles is a triangle, whereby two flanks of the triangle form said two flanks of the profile. There is an oblique structure between a first and second surface of such a plate, and the plate can resist bending very well.

According to yet another embodiment, the cross section of at least some profiles is an isosceles triangle. This way, symmetry is easy to achieve in the plate structure.

According to yet another embodiment, the cross section of at least some profiles is an equilateral triangle. Such a solution further facilitates the forming of a plate, and a good end results is easily achievable.

According to yet another embodiment, the cross section of at least some profiles is a right-angled triangle. Such a solution makes it possible to provide the plate structure with both an oblique structure between the first and second surfaces, and an orthogonal structure between the surfaces.

According to yet another embodiment, at least some of the profiles in the plate are hollow. This makes the plate simple and easy to form.

According to yet another embodiment, at least some of the profiles in the plate are filled. By filling the profiles, it is relatively simple to provide the plate with different kind of desired characteristics.

According to yet another embodiment, the cross sectional form of all the profiles is the same. In such a case, the plates are easy to manufacture and the desired plate characteristics are simple to achieve.

A plate according to any of the above embodiments may be used to form at least one end of a tank to be installed underground, or a top end and/or bottom end, that is, a bottom of a vertical tank. So, the tank may be of horizontal or vertical type, or a well or a pumping plant, or a similar product. The plate forming an end of a tank may be made larger than the cross section of the tank. This way it is possible to form a self-anchored, underground-installable tank, or a tank having per se a structure that allows anchoring. The plate in such a case extends outside the casing of the tank, and on top of this plate that extends outside the tank, ground may be adapted to prevent groundwater induced buoyancy on the tank. Such an anchoring method of a tank is cost-effective, because there is no need for a separate concrete slab or other anchoring structures. By means of the invention, an overall low-cost tank structure may be achieved.

### Brief description of the drawings

The invention will now be described in more detail in connection with preferred embodiments and with reference to the accompanying drawings, in which:
Figure 1 is a schematic end view of an embodiment of the plate and forming the plate;
Figure 2 is a schematic end view of a second embodiment of the plate;
Figure 3 is a schematic end view of a third embodiment of the plate;
Figure 4 is a schematic end view of a fourth embodiment of the plate;
Figure 5 is a schematic end view of a fifth embodiment of the plate;
Figure 6 is a schematic end view of a sixth embodiment of the plate;
Figure 7 is a schematic end view of a seventh embodiment of the plate;
Figure 8 is a schematic end view of an eighth embodiment of the plate;
Figure 9 is a schematic end view of a ninth embodiment of the plate;

### Detailed description of the invention

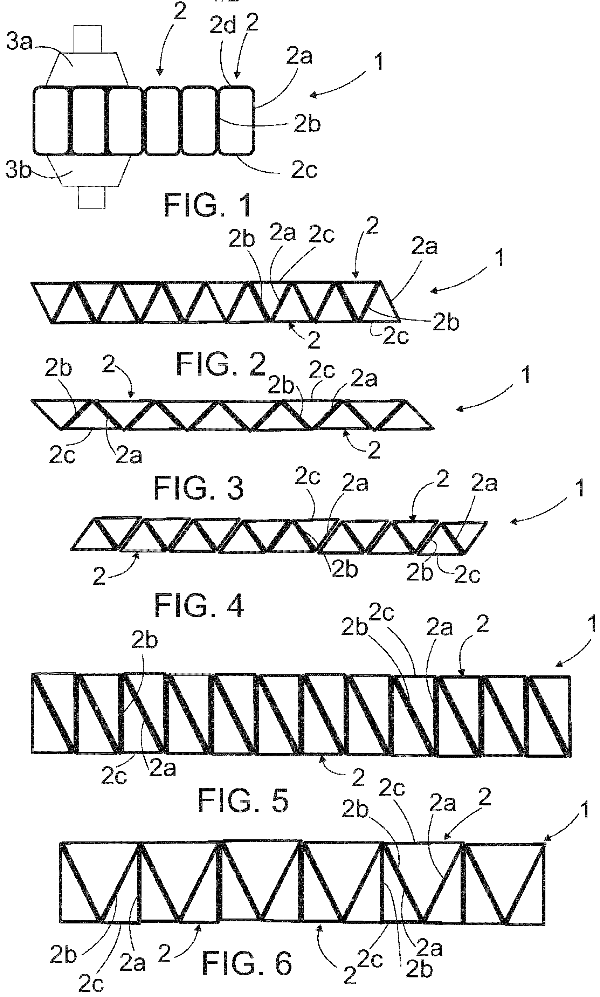

Figure 1 illustrates a plate 1 and a phase in its forming process. The plate 1 is formed of a plurality of adjacent profiles 2. The profiles 2 are profiles that are extruded hollow. The plate 1 may also be referred to as a cellular board or a cellular plate structure. The profiles 2 may be manufactured of a thermoplastic material such as polyethene PE, polypropylene PP, or a composite material, for example.

At a first phase of manufacturing the plate 1, a straight profile is extruded. The formed profile is cut into pieces of a suitable length. The cut profile pieces are placed side-by-side and joined together, whereby a plate is formed. The profiles are cut to profiles 2 that are, for example, 0.5 to 10 m long. The profiles 2 may be laterally 20 to 200 mm wide, for example, and vertically 50 to 500 mm high. In other words, the flanks 2a and 2b of the profiles 2 may be, for example, 50 to 500 mm high and bases 2c and 2d of the profiles 2 may be, for example, 20 to 200 mm wide. At least three profiles 2 are adapted adjacently. A plate may have as many as tens of profiles 2 adapted side-by-side. The width of the manufactured plate 1 may be, for example, 0.5 to 10 m.

The wall thickness of the profiles 2 may be, for example, 2 to 20 mm. The profiles 2 are rigid, whereby they are advantageously formed of a non-foamed thermoplastic material.

In the embodiment of Figure 1, the profiles 2 are joined together by extrusion welding. The profiles 2 are adapted adjacently in the horizontal plane, and over them is adapted a first extruder 3a, and below a second extruder 3b. With the extruders 3a and 3 b, material is extruded which joins the profiles 2 together. The material extruded with the extruders 3a and 3b is advantageously the same material of which the profiles 2 are made.

The extruders 3a and 3b may thus carry out the joining of the profiles 2 so that extrusion welding takes place simultaneously from both sides of the plate 1 being formed. Joining may also be so accomplished that extrusion welding is first performed on the first side and then on the second side. The extruder 3a, 3b may be used to join two profiles simultaneously, in other words, to make one seam, or a plurality of profiles may be joined at the same time, in other words, a plurality of seams may be made at the same time. There may be one extruder 3a, 3b on one side of a plate being manufactured, or a plurality of extruders adjacently. As mentioned in the above, in Figure 1 the profiles are placed side-by-side in the horizontal plane, but the profiles 2 may be placed vertically side-by-side, so a pile out of them may be formed before they are joined.

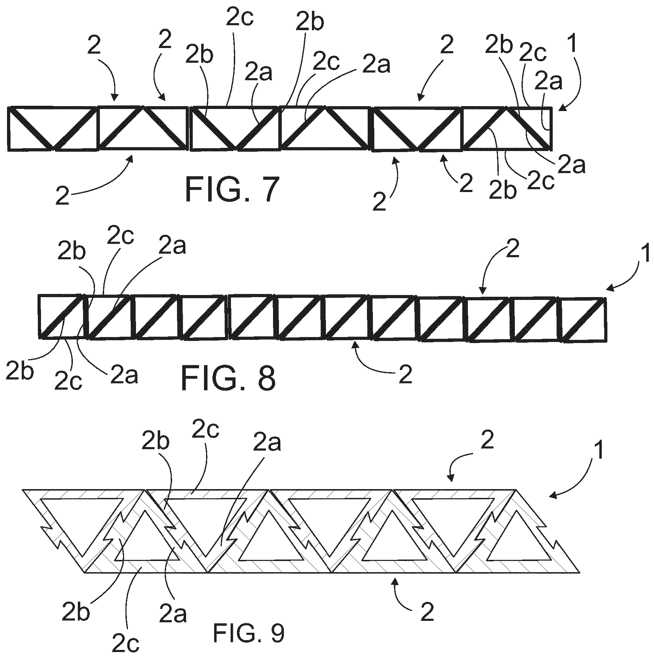

Instead of extrusion welding, the profiles 2 may be joined together by wire, ultrasonic, laser, or butt welding. Furthermore, the profiles 2 may be joined together by glueing or by a mechanical joint, such as the dovetail joint shown in Figure 9, or by another feasible joining method.

As pointed out, the profiles 2 are formed hollow by extrusion. In a finished plate 1, the profiles 2 may also be hollow. According to an embodiment, the profiles 2 are however filled either before they are joined together, or when they are fixed to the plate 1. By filling the profiles 2, it is easily possible to adjust the properties of the plate 1, such as bending stiffness. The profiles 2 may be filled, for example, by a foam welding on the profile walls. For example, inside the profiles formed of non-foamed polyethene, foamed polyethene may be adapted. Another foam or filling may also be adapted inside the profiles 2. In addition to or instead of a foam, another material may be adapted inside the profiles 2 to stiffen them, for example, such as wood, steel, aluminium, concrete, or glass.

The profiles 2 may also be stiffened by adapting additional stiffeners inside the profile 2 walls. Such additional stiffeners may also be adapted in the welding seams between the profiles 2, for example. The additional stiffeners may be, for example, steel, glass, aluminium or another suitable material.

In the embodiment of Figure 1, the flanks 2a and 2b of the profiles 2 abut the flanks 2a and 2b of the adjacent profiles 2. The bases 2c and 2d of the profiles 2 form the surfaces of the plate 1. The flanks 2a and 2b of the profiles 2 are longer than the bases 2c and 2d of the profiles 2. In this embodiment, when on both sides of the profile 2 an adjacent profile 2 is joined so that the two flanks 2a and 2b of the profile 2 abut the adjacent profiles 2, more than 50 % of the area of the outer surface of the profile 2 is against the adjacent profiles 2. This creates a very good plate 1 insofar as its bending characteristics, for example, are concerned.

On its outer periphery, a rectangular profile 2 may also be rectangular on the inside, as shown in Figure 1. According to an embodiment, a profile rectangular on its outer periphery may have a support structure inside, which may be a partition wall extending obliquely from corner to corner. This partition wall may be similar in material and thickness, for example, as the wall forming the outer periphery. Due to the oblique partition wall, the profile 2 has two triangular structures whereby there is also an oblique structure between the first surface and second surface of the plate 1.

In the embodiment of Figures 2 to 9, the cross section of the profiles is a triangle. In such a case, the walls forming the outer periphery of the profiles establish an oblique structure also between the first surface and second surface of the plate. The bases 2c of the triangular profiles 2 form the surfaces of the plate 1, and the flanks 2a and 2b of the triangular profiles 2 are against the flanks 2a and 2b of the adjacent triangular profiles 2. In these embodiments, too, when on both sides of the profile 2 an adjacent profile 2 is joined so that the two flanks 2a and 2b of the profile 2 abut the adjacent profiles 2, more than 50 % of the area of the outer surface of the profile 2 is against the adjacent profiles 2.

In the embodiment of Figure 2, the triangle has the form of an isosceles triangle. The base 2c of the triangular profiles 2 is shorter than its flanks 2a and 2b. In the embodiment of Figure 3, too, the triangle has the form of an isosceles triangle. The base 2c of the triangular profiles 2 is longer than its flanks 2a and 2b. In the embodiment of Figure 3, there is a right angle between the flanks 2a and 2b.

In the embodiment of Figure 4, the triangle has the form of an equilateral triangle, in other words, the base 2c has the same length as the flanks 2a and 2b. This makes a plate simple to manufacture because it does not matter in the work stages, which of the sides of the triangle is placed against a side of an adjacent triangle.

In the embodiment of Figure 5, there is a right angle between the base 2c and the first flank 2a. This allows a plate to be manufactured in which there is both an oblique structure and orthogonal structure between the first surface and second surface.

In the embodiments of Figures 6 and 7, some of the profiles 2 are right-angled triangles according to the embodiment of Figure 5, and some are isosceles triangles. In the embodiment of Figure 6, all the isosceles triangle profiles are placed so that their base 2c forms the first surface of the plate 1. In the embodiment of Figure 7, in turn, the bases 2c of the isosceles triangles form a part of both the first surface and second surface of the plate 1.

The profiles 2 in the embodiment of Figure 8 have the same form as in the embodiment of Figure 3. However, in the embodiment of Figure 3 the plate 1 is formed by adapting the legs of the triangles against each other. In the embodiment of Figure 8 instead, the hypotenuse of the triangle forms its first flank 2a, placed abutting the hypotenuse of the adjacent triangle, and its second flank 2b is formed by a leg placed on the second side against a leg of the adjacent triangle.

Figure 9 illustrates mechanical joining together of profiles. Mechanical joining may take place by making use of form-locking, for example. In Figure 9, an example of form-locking is presented by a dovetail joint.

According to an embodiment, more than 55 % of the outer surface area of the profile 2 is against the adjacent profiles 2. According to another embodiment, more than 60 % of the outer surface area of the profile 2 is against the adjacent profiles 2.

Those skilled in the art will find it obvious that, as technology advances, the basic idea of the invention may be implemented in many different ways. The invention and its embodiments are thus not restricted to the examples described above but may vary within the scope of the claims.

## Claims

1. A plate formed of a plurality of adjacent profiles (2), which profiles (2) are profiles (2) of a thermoplastic material extruded hollow, and which profiles (2) are substantially straight and rigid, whereby the profiles (2) are adapted adjacently and joined together by welding, **characterized by** the cross section of the profiles (2) being such that when an adjacent profile (2) is joined on both sides of the profile (2) so that two flanks (2a, 2b) of the profile (2) are against the adjacent profiles (2), more than 50 % of the outer surface area of the profile (2) is against the adjacent profiles (2), and the cross section of the profiles (2) is a triangle, whereby the two flanks (2a, 2b) of the triangle form said two flanks (2a, 2b) of the profile (2).

2. A plate as claimed in claim 1, wherein the cross section of at least some profiles (2) is an isosceles triangle.

3. A plate as claimed in claim 1 or 2, wherein the cross section of at least some profiles (2) is an equilateral triangle.

4. A plate as claimed in any one of the preceding claims, wherein the cross section of at least some profiles (2) is a right-angled triangle.

5. A plate as claimed in any one of the preceding claims, wherein at least some of the profiles (2) in the plate are hollow.

6. A plate as claimed in any one of the preceding claims, wherein at least some of the profiles (2) in the plate are filled.

7. A plate as claimed in any one of the preceding claims, wherein all the profiles (2) have the same cross sectional form.

8. A plate as claimed in any one of the preceding claims, wherein the profiles (2) are joined together by extrusion welding.

9. A tank with at least one end thereof being formed of a plate (1) according to any one of claims 1 to 8.

## Patentansprüche

1. Platte, die aus einer Vielzahl benachbarter Profile (2) gebildet ist, wobei die Profile (2) Profile (2) aus einem thermoplastischen Material sind, das hohl extrudiert wird, und wobei die Profile (2) im Wesentlichen gerade und starr sind, wodurch die Profile (2) benachbart angepasst und durch Schweißen miteinander verbunden sind, **dadurch gekennzeichnet, dass** der Querschnitt der Profile (2) derart ist, dass, wenn ein benachbartes Profil (2) derart auf beiden Seiten des Profils (2) verbunden ist, dass zwei Flanken (2a, 2b) des Profils (2) gegen die benachbarten Profile (2) anliegen, mehr als 50 % des äußeren Oberflächeninhalts des Profils (2) gegen die benachbarten Profile (2) anliegt, und der Querschnitt der Profile (2) ein Dreieck ist, wodurch die zwei Flanken (2a, 2b) des Dreiecks die zwei Flanken (2a, 2b) des Profils (2) bilden.

2. Platte nach Anspruch 1, wobei der Querschnitt zumindest einiger Profile (2) ein gleichschenkliges Dreieck ist.

3. Platte nach Anspruch 1 oder 2, wobei der Querschnitt zumindest einiger Profile (2) ein gleichseitiges Dreieck ist.

4. Platte nach einem der vorhergehenden Ansprüche, wobei der Querschnitt zumindest einiger Profile (2) ein rechtwinkliges Dreieck ist.

5. Platte nach einem der vorhergehenden Ansprüche, wobei zumindest einige der Profile (2) in der Platte hohl sind.

6. Platte nach einem der vorhergehenden Ansprüche, wobei zumindest einige der Profile (2) in der Platte gefüllt sind.

7. Platte nach einem der vorhergehenden Ansprüche, wobei sämtliche Profile (2) die gleiche Querschnittsform aufweisen.

8. Platte nach einem der vorhergehenden Ansprüche, wobei die Profile (2) durch Extrusionsschweißen miteinander verbunden sind.

9. Tank, wobei mindestens ein Ende davon aus einer Platte (1) nach einem der Ansprüche 1 bis 8 gebildet ist.

## Revendications

1. Plaque formée avec une pluralité de profils (2) adjacents, lesquels profils (2) sont des profils (2) d'un matériau thermoplastique extrudé creux, et lesquels profils (2) sont sensiblement droits et rigides, moyennant quoi les profils (2) sont adaptés de manière adjacente et assemblés par soudage, **caractérisée par** la section transversale des profils (2) qui est telle que lorsqu'un profil (2) adjacent est assemblé sur les deux côtés du profil (2) de sorte que deux flancs (2a, 2b) du profil (2) sont contre les profils (2) adjacents, plus de 50% de la superficie externe du profil (2) est contre les profils (2) adjacents, et la section transversale des profils (2) est un triangle, moyennant quoi les deux flancs (2a, 2b) du triangle forment lesdits deux flancs (2a, 2b) du profil (2).

2. Plaque selon la revendication 1, dans laquelle la section transversale d'au moins certains profils (2) est un triangle isocèle.

3. Plaque selon la revendication 1 ou 2, dans laquelle la section transversale d'au moins certains profils (2) est un triangle équilatéral.

4. Plaque selon l'une quelconque des revendications précédentes, dans laquelle la section transversale d'au moins certains profils (2) est un triangle rectangle.

5. Plaque selon l'une quelconque des revendications précédentes, dans laquelle au moins certains des profils (2) dans la plaque sont creux.

6. Plaque selon l'une quelconque des revendications précédentes, dans laquelle au moins certains des profils (2) dans la plaque sont remplis.

7. Plaque selon l'une quelconque des revendications précédentes, dans laquelle tous les profils (2) ont la même forme transversale.

8. Plaque selon l'une quelconque des revendications précédentes, dans laquelle les profils (2) sont assemblés par soudage par extrusion.

9. Cuve avec au moins son extrémité qui est formée avec une plaque (1) selon l'une quelconque des revendications 1 à 8.
